# EUROPÄISCHE PATENTSCHRIFT

(11) **EP 0 562 502 B1**
(45) Veröffentlichungstag und Bekanntmachung des Hinweises auf die Patenterteilung: **05.06.1996**
(21) Anmeldenummer: 93104603.1
(22) Anmeldetag: 20.03.1993
(51) Int. Cl.: B01D 46/24, B01D 29/21

(54) **In ein Filtergehäuse einbaubare Filterpatrone**
Built-in filter cartridge
Cartouche filtrante encastrable

(30) Priorität: 27.03.1992 DE 9204169 U
(43) Veröffentlichungstag der Anmeldung: 29.09.1993
(73) Patentinhaber: Rapp, Peter, D-74629 Pfedelbach (DE)
(72) Erfinder: Rapp, Peter, D-74629 Pfedelbach (DE)
(74) Vertreter: Müller, Hans, Dipl.-Ing.

(56) Entgegenhaltungen:
- EP-A- 0 423 435
- WO-A-87/04945
- DE-U- 9 103 400
- US-A- 4 758 256

## Beschreibung

### TECHNISCHES GEBIET

Die Erfindung betrifft eine Filterpatrone, die zum Einbau in ein Filtergehäuse vorgesehen ist. Derartige Filterpatronen werden einzeln oder zu mehreren in Filtergehäusen austauschbar befestigt. Die Filterpatronen werden beispielsweise in Entstaubungsanlagen verwendet. Die mit Stäuben versehene Rohluft wird von außenher durch das Filtermedium der betreffenden Filterpatrone hindurchgeleitet, wobei sich die Stäube an der Außenseite des Filtermediums absetzen. Zum Reinigen wird Druckluft in Gegenrichtung durch die Filterpatrone stoßweise hindurchgedrückt, um die an dem Filtermedium sich abgelagerten Staubpartikel wieder von dem Filtermedium zu entfernen.

### STAND DER TECHNIK

Bekannte Filterpatronen besitzen ein als Faltenbalg ausgebildetes Filtermedium. Das Filtermedium ist oftmals aus Kunststoffmaterial hergestellt. Das Filtermedium, d. h. der Faltenbalg, wird regelmäßig von einem oberen und unteren Kunststoffring gehalten, in denen es eingegossen vorhanden ist. Der Kopf der Filterpatrone ist so ausgebildet, daß die Filterpatrone an einem Filtergehäuse austauschbar befestigt werden kann. Die Befestigung erfolgt oftmals über eine um die Längsachse der zylindrischen Filterpatrone erfolgende Verschraubbewegung.

Bekannte derartige Filterpatronen weisen in ihrem Inneren ein metallisches Stützrohr auf, das mit zahlreichen Durchbrüchen versehen ist. Die Durchbrüche erlauben einen freien Durchtritt der das Filtermedium durchströmenden Luft.

Das Stützrohr dient zur Stabilisierung der Filterpatrone in ihrem in ein Filtergehäuse eingebauten Zustand. Eine diesbezüglich bekannte Filterpatrone wird mit Hilfe des Stützrohres an einem Filterghäuse angeschraubt. Das Stützrohr ist dazu an seinem oberen Ende mit einem Schraubgewinde versehen. Das untere Ende des Stützrohres lagert sich von unten an der unteren Kunststoffeinfassung der Filterpatrone gasdicht an. Damit ist das Filtermedium mit seinen oberen und unteren Kunststoffeinfassungen oben und unten unverrückbar gehalten. Allerdings ist in diesem eingebauten Zustand der Filterpatrone der Faltenbalg in seiner Längsrichtung mit Druckkräften beaufschlagt. Dieses birgt die Gefahr in sich, daß beim Abreinigungsvorgang, bei dem in das Innere der Filterpatrone stoßartig Druckluft eingeblasen wird, das Filtermedium und damit der Faltenbalg nach außen ausgebeult wird. Infolge der auf den Faltenbalg infolge des Stützrohres einwirkenden Druckkräfte ist dann die Gefahr sehr groß, daß dieses Ausbeulen sich beim Beenden des Reinigungsvorganges nicht mehr zurückbildet. Aus diesem Grunde sind derartige Filterpatronen außen mit Bauchbinden versehen. Abgesehen davon, daß die Verwendung derartiger Bauchbinden die Herstellkosten von Filterpatronen verteuert, stellen die Bauchbinden auch auch eine Verteuerung beim Entsorgen der Filter dar; ein wirtschaftliches Entsorgen setzt nämlich voraus, daß die beim Entsorgen anfallenden Materialien artenrein gesammelt werden. Für eine Filterpatrone bedeutet das, daß die metallischen Teile wie zum Beispiel das metallische Stützrohr oder auch metallische Bauchbinden getrennt von dem Faltenbalg entsorgt werden müssen. Während sich das Stützrohr im Stand der Technik leicht von dem aus Kunststoff bestehenden Faltenbalg lösen läßt, müssen die im Stand der Technik verwendeten metallischen Bauchbinden in einem separaten zusätzlichen Verfahrensschritt von dem Faltenbalg gelöst werden.

Aus der WO-A 87 04 945 ist eine Luftfiltervorrichtung bekannt, bei der die in Art einer Filterpatrone ausgebildete Filteranordnung frei nach unten hängend an einer mechanischen Rüttelanordnung befestigt ist. Der Faltenbalg dieser Anordnung steht unter Zugspannung, hervorgerufen durch Eigengewicht. Aufgrund der relativ geringen Zugspannung und der nicht vorhandenen exakten lagemäßigen Fixierung des unteren Bereichs dieser Filterpatrone ist eine Abreinigung mittels Einleiten von Druckluft praktisch nicht möglich. Außerdem sind die Stützrohre für diese Filterpatrone zusammen mit dem Faltenbalg in üblicher Weise in einem oberen und unteren Kunststoffring eingeschweißt. Dadurch ist eine artenreine Entsorgung nicht möglich.

Es sind ferner mit Stützkörben ausgestattete Filterpatronen bekannt (US-A 4758256, DE-U 91 03 400, EP-A 0 423 435), bei denen im eingebauten Zustand das eigentliche Filtermedium unter Druckspannung steht. Es sind daher Vorkehrungen vorzunehmen, sowohl was den Filterbetrieb als auch was das Abreinigen betrifft, um zu verhindern, daß sich bauchartige Auswölbungen des Filtermediums bilden können.

### DARSTELLUNG DER ERFINDUNG

Ausgehend von diesem vorbekannten Stand der Technik liegt der Erfindung die Aufgabe zugrunde, eine Filterpatrone anzugeben, die sich wirtschaftlich günstig recyceln läßt und deren Handhabung und Standzeit im Betrieb trotzdem möglichst groß ist.

Diese Erfindung ist durch die Merkmale des Patentanspruchs 1 gegeben. Sie zeichnet sich, ausgehend von dem bekannten Stand der Technik, dementsprechend dadurch aus, daß eine Spreizvorrichtung an der Stützvorrichtung befestigt ist, mit der die untere Kunststoffeinfassung von der oberen Kunststoffeinfassung wegziehbar ist.

Die Stützvorrichtung ist dabei nicht fest mit der unteren Kunststoffeinfassung verbunden, so daß im eingebauten Zustand der Patrone die Stützvorrichtung von der unteren Kunststoffeinfassung weggedrückt wird. Im eingebauten Zustand der Patrone steht ihr Faltenbalg damit unter Zugspannung. Dies hat den großen Vorteil, daß auf das Anordnen von im Stand der Technik bekannten Bauchbinden für den Faltenbalg verzichtet werden kann. Der Faltenbalg steht nämlich unter Zugspannung, so daß bei einem Abreinigen und damit bei einem Beaufschlagen von Druckluft der Faltenbalg nach außen wohl ausgelenkt werden wird, sich diese Auslenkung infolge der Zugspannung aber automatisch immer wieder zurückbilden wird. Auch beim Beaufschlagen des Filters mit Rohluft steht der Filterbalg unter Zugspannung, so daß auch eine dadurch bedingte Auslenkung des Filterbalges keine bleibenden Beulknickverformungen bewirken kann. Trotzdem läßt sich das Filtermedium, wie zum Beispiel der Faltenbalg, problemlos von der metallischen Stützvorrichtung lösen und damit getrennt entsorgen.

Weitere Merkmale und Vorteile der Erfindung sind Gegenstand von Unteransprüchen.

Da die Stützvorrichtung mittels einer Spreizvorrichtung von der unteren Kunststoffeinfassung wegdrückbar ausgebildet ist, werden beim Einleiten von Druckkräften auf die Stützvorrichtung gleichzeitig entsprechend große Zugkräfte auf den Faltenbalg eingeleitet. Die Spreizvorrichtung kann vorteilhafterweise mittels einer Schraubeinrichtung derart erfolgen, daß durch Verstellen der Schraubvorrichtung der Abstand zwischen der Stützvorrichtung und der unteren Kunststoffeinrichtung in Längsrichtung der Patrone verstellt und damit verändert werden kann. Je größer der Abstand zwischen der Stützvorrichtung und der unteren Kunststoffeinfassung verstellt wird, um so größer werden die auf den Faltenbalg einwirkenden Zugkräfte bzw. die auf die Stützvorrichtung einwirkenden Druckkräfte.

Das obere Ende der Stützvorrichtung kann an das Filtergehäuse oder auch an Teile der Filterpatrone anpreßbar ausgebildet werden. Sofern im eingebauten Zustand der Patrone die Stützvorrichtung an dem Filtergehäuse angepreßt vorhanden sein soll, muß das Filtergehäuse entsprechende Anlageflächen aufweisen. Dieses setzt eine entsprechende geometrisch exakte Ausbildung des Filtergehäuses im Bereich des Durchbruches voraus, an dem die Filterpatrone befestigt werden soll. Es ist allerdings auch möglich, die Stützvorrichtung an Teilen der Filterpatrone zu befestigen. Dabei werden diese im Kopfbereich der Filterpatrone vorhandenen Teile dann an dem Filtergehäuse separat befestigt. Ein derartiges Teil kann beispielsweise in Form eines Ringkranzes ausgebildet sein. Dieser Ringkranz ist dann beispielsweise anschraubbar an dem Filtergehäuse zu befestigen. Der Filter kann dann an diesem Ringkranz lösbar befestigt werden. Eine Möglichkeit für diese lösbare Befestigung ist beispielsweise in Form eines Bajonettverschlusses ausgebildet. Dadurch besitzt die obere Kunststoffeinfassung des Faltenbalges entsprechende Aus- bzw. Einformungen. Diese Einformungen müssen mit Hinterschneidungen des Ringkranzes korrespondieren. So kann dann die Stützvorrichtung gegen entsprechend einkragende Anlageflächen des Ringkranzes druckfest angelegt werden. Es ist aber auch möglich, die Stützvorrichtung an entsprechenden Anlageflächen der oberen Kunststoffeinfassung druckfest anzulegen.

In jedem Falle hängt die obere Kunststoffeinfassung entweder direkt oder indirekt über eine am Filtergehäuse befestigte Einfassung, wie zum Beispiel dem Ringkranz, an dem Filtergehäuse an. Die auf die obere Kunststoffeinfassung über den Faltenbalg einwirkende Zugbeanspruchung wird über die Stützvorrichtung entweder wieder in diese obere Kunststoffeinfassung oder in sonstige Teile der Filterpatrone oder direkt in das Filtergehäuse eingeleitet.

### KURZE BESCHREIBUNG DER ZEICHNUNG

Die Erfindung wird im folgenden anhand der in der Zeichnung dargestellten Ausführungsbeispiele näher beschrieben und erläutert:
- Fig. 1: eine perspektivische Darstellung einer Filterpatrone mit einer ihrem Kopf angepaßten Halteeinrichtung,
- Fig. 2: ein Längsschnitt durch die Filterpatrone mit Halteeinrichtung gemäß Fig. 1, in eingebautem Zustand,
- Fig. 3: eine Untersicht in die kopfseitig vorhandene Halteeinrichtung der Patrone gemäß Fig. 1 und 2 und
- Fig. 4: einen Querschnitt durch eine weitere Ausführungsform für eine an einem Filtergehäuse befestigte Filterpatrone nach der Erfindung.

### WEGE ZUR AUSFÜHRUNG DER ERFINDUNG

Eine Filterpatrone 10 besitzt ein zu einem Faltenbalg 12 geformtes Filtermedium. Der Faltenbalg 12 besitzt eine im Querschnitt kreisförmige Umrißform.

Der Faltenbalg 12 ist an seinen oberen und unteren Stirnseiten in eine obere und untere Kunststoffeinfassung 14, 16 eingegossen gehalten. Die obere Kunststoffeinfassung 14 ist mit seitlich auskragenden Vorsprüngen 18 versehen. Diese Vorsprünge dienen zum Befestigen der Filterpatrone 10 an einem Haltering 20, wie noch weiter unten näher beschrieben wird.

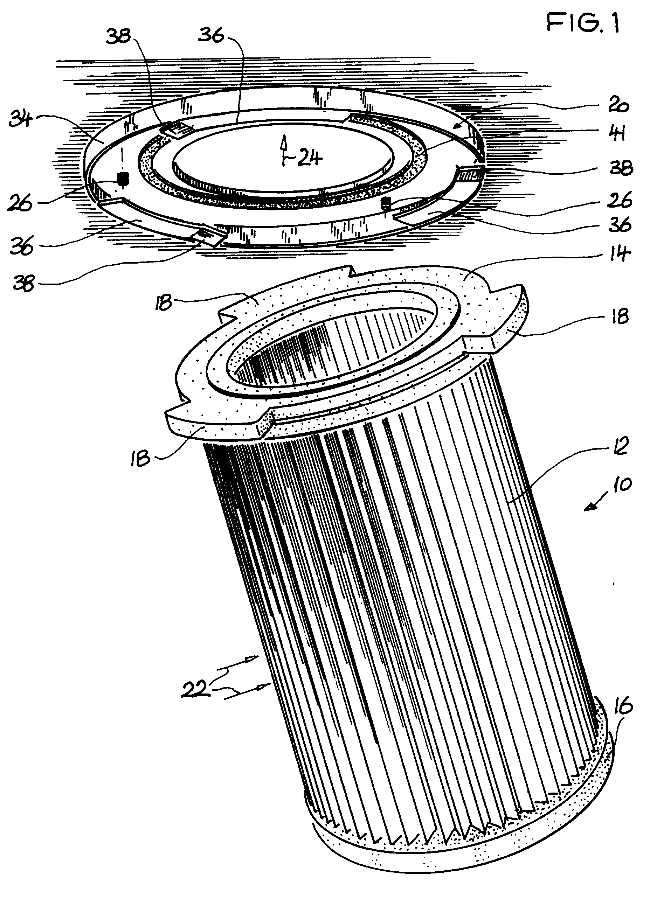

Die Filterpatrone 10 wird in beispielsweise Entstaubungsanlagen von außen mit Rohluft 22 beaufschlagt. Die in der Rohluft vorhandenen Stäube lagern sich außen an dem Faltenbalg 12 an. Die gereinigte Reinluft 24 strömt dann aus dem Inneren des Faltenbalges 12 und damit aus dem Inneren der Filterpatrone 10 nach - in Fig. 1 - oben heraus. Zum Abreinigen des Faltenbalges 12 wird in umgekehrter Strömungsrichtung Druckluft in das Innere des Faltenbalges 12 eingeleitet. Die Druckwellen beulen den Faltenbalg nach außen schlagartig aus, wobei die an dem Faltenbalg außen anhängenden Verunreinigungen abfallen.

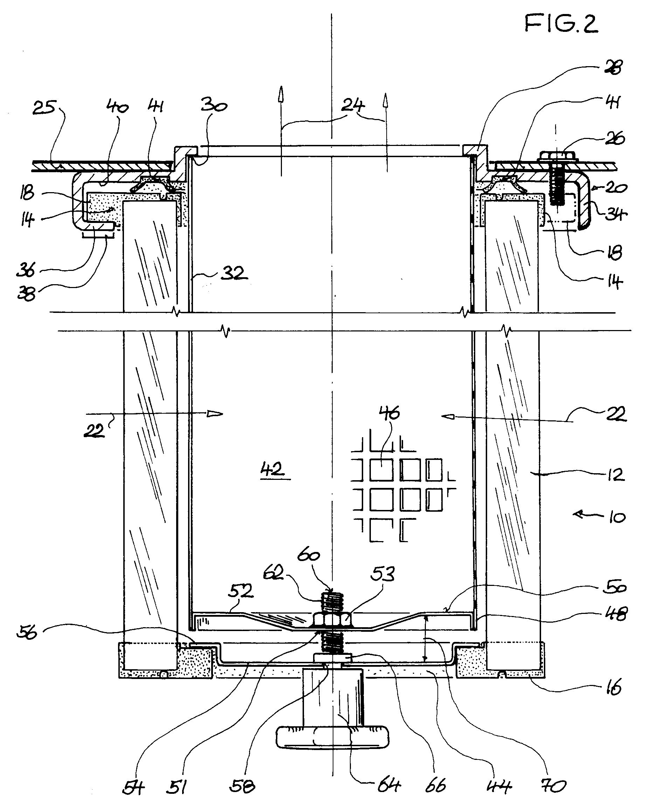

In Fig. 2 ist der Haltering 20 in seinem an einer Platte 25 eines Filtergehäuses befestigten Zustand dargestellt. Der Haltering 20 ist mittels mehrerer Schrauben 26 an dieser Platte 25 befestigt.

Der Haltering 20 weist eine kreisringförmige Gestalt auf. Sein innerer Rand weist eine Z-förmige Randausbildung 28 auf. An der dadurch ausgebildeten inneren Schulter 30 stützt sich ein Stützkorb 32 ab. Dieser Stützkorb 32 ist im Inneren der Filterpatrone 10 und damit im Inneren des Faltenbalges 12, im Abstand zu letzterem, vorhanden.

Die äußere Randausbildung des Halteringes 20 besitzt eine umlaufende Abwinklung 34, an der sich abschnittsweise vorhandene Umstülpungen 36 anschließen. Im vorliegenden Fall sind drei Umstülpungen 36 ebenso wie drei Vorsprünge 18 an der oberen Kunststoffeinfassung 14 vorhanden. Die Zwischenräume zwischen zwei Umstülpungen 36 sind so groß, daß in diesen Zwischenraum ein Vorsprung 18 jeweils eingeschoben werden kann. Die Abwinklung 34 und die Umstülpung 36 sind so geformt, daß eine Filterpatrone 10 mit ihren Vorsprüngen 18 in den Bereich der Umstülpungen 36 des Halteringes 20 gedreht werden kann. Die Filterpatrone 10 ist bei der Darstellung gemäß Fig. 2 damit bajonettartig an dem Haltering 20 befestigt. Zum leichteren Einführen der Vorsprünge 18 in den Bereich der Umstülpungen 36 sind letztere mit einer nach außen schräg abgebogenen Anlaufschräge 38 versehen.

Zwischen der oberen Kunststoffeinfassung 14 und der Innenseite 40 des Halteringes 20 ist ein Dichtprofilring 41 vorhanden. Dieser Ring 41 ist im vorliegenden Beispielsfall an dem Haltering 20 eingelassen vorhanden. Bei dem in Fig. 2 dargestellten eingebauten Zustand der Filterpatrone 10 ist die Kunststoffeinfassung 14 damit gasdicht an dem Haltering 20 befestigt. Rohluft 22 kann damit nur durch den Faltenbalg 12 hindurch in das Innere 42 der Filterpatrone 10 gelangen. Die Reinluft 24 kann in entsprechender Weise nur nach oben aus der Filterpatrone 10 heraus entweichen. Ein Entweichen nach unten wird dadurch verhindert, daß die untere Kunststoffeinfassung 16 nicht wie die obere Kunststoffeinfassung 14 ringförmig sondern mit einem Boden 44 gasdicht versehen und damit verschlossen ist.

Der Stützkorb 32 ist aus einem Lochblech 46 gebildet, so daß die Rohluft 22 praktisch störungsfrei in das Innere 42 gelangen kann.

In seinem unteren Bereich 48 ist an dem Stützkorb 32 eine Platte 50 befestigt.

Zentrisch ist in der Platte ein Durchbruch 51 vorhanden, der von einer Mutter 53 eingerahmt wird. Die Mutter 53 ist auf der Innenseite 52 dieser Platte 50 befestigt.

Im Abstand unterhalb dieser Platte 50 ist eine weitere Platte 54 vorhanden. Diese Platte lagert sich mit ihrem Randbereich 56 auf der unteren Kunststoffeinfassung 16 von innen auf.

Nachdem im vorliegenden Fall die Kunststoffeinfassung 16 mit einem Boden 44 versehen ist, braucht zwischen dem Randbereich 56 und der Kunststoffeinfassung 16 kein Dichtprofil vorhanden zu sein. Sofern die untere Kunststoffeinfassung 16 ebenso wie die obere Kunststoffeinfassung ringförmig ausgebildet werden, kann durch das Anordnen eines Dichtprofilringes zwischen dem Randbereich 56 und der unteren Kunststoffeinfassung 16 eine Gasdichtigkeit in diesem Bereich hergestellt werden. Sofern die untere Platte 54 in ihrem flächigen Bereich ebenfalls gasdicht ist wird dann auf diese Weise sichergestellt, daß Reinluft 24 nur nach oben aus der Filterpatrone 10 heraus entweichen kann.

Im Zentrum der unteren Platte 54 ist ein weiterer Durchbruch 58 vorhanden, der zentrisch unterhalb des in der oberen Platte 50 befindlichen Durchbruches 51 sich befindet. Durch beide Durchbrüche ist von unten eine Schraube 60 hindurchgeführt, die ein Linksgewinde 62 besitzt. Die Schraube ist in der Mutter 53 schraubgängig. An ihrem außerhalb der Filterpatrone 10 vorhandenen Ende ist die Schraube 60 mit einem Schraubenkopf 64 versehen, mittels dem die Schraube 60 leicht in beiden Richtungen gedreht werden kann.

Auf der Schraube 60 ist eine Dichtscheibe 66 so angebracht, daß sie auf der Innenseite der unteren Platte 54 gasdicht anliegt. Dadurch wird auch im Bereich des Durchbruches 58 eine Gasdichtigkeit erreicht.

Beim Drehen des Schraubenkopfes 64 und damit der Schraube 60 schraubt sich diese Schraube 60 mehr oder weniger weit in die Mutter 53 hinein. Dadurch wird der Abstand 70 zwischen den beiden Platten 50, 54 mehr oder weniger groß. Sofern die Schraube 60 nach unten aus der Mutter 53 herausgedreht wird, wird der Abstand 70 in entsprechender Weise vergrößert. Dadurch wird die untere Platte 54 mit ihrem Randbereich 56 auf die untere Kunststoffeinfassung 16 aufgepreßt, während gleichzeitig der Stützkorb 32 nach oben gegen die Schulter 30 des Halteringes 20 gedrückt wird. Auf den Faltenbalg 12 wird infolgedessen eine Zugspannung aufgebracht.

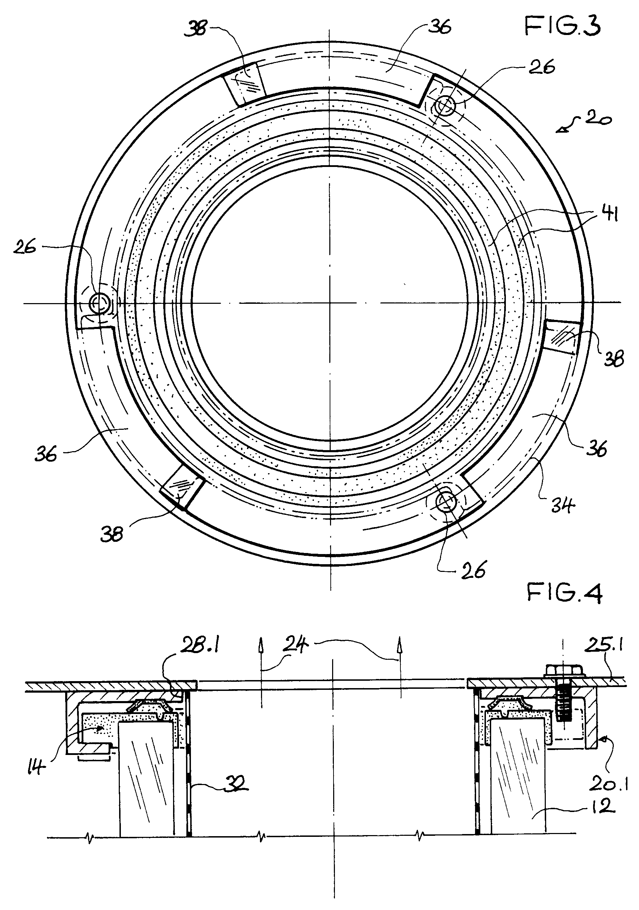

Bei der in Fig. 4 dargestellten Ausführungsform drückt der Stützkorb 32 nicht gegen den Haltering 20 sondern unmittelbar gegen eine Platte 25.1 eines Filtergehäuses. Der in Fig. 4 dargestellte Haltering 20.1 unterscheidet sich vom Haltering 20 dadurch, daß er keine Z-förmige Randausbildung 28 besitzt sondern daß er mit seinem inneren Rand 28.1 im Abstand außen vor dem Stützkorb 32 endet.

Zum Ausbauen der Filterpatrone 10 wird der Schraubekopf 64 linksherum gedreht, so daß sich der Abstand 70 zwischen den beiden Platten 50, 54 verringert. Dadurch wird der Stützkorb 32 nach unten bewegt, so daß er seine drückende Anlage an der Schulter 30 des Halteringes 20 verliert. Anschließend kann dann die Filterpatrone 10 mit ihrer oberen Kunststoffeinfassung 14 aus dem Haltering 20 schraubenförmig herausgedreht werden. Die Vorsprünge 18 der oberen Kunststoffeinfassung 14 gelangen damit außerhalb des Bereiches der Umstülpungen 36. Anschließend wird der Faltenbalg 12 mit dem Stützkorb 32 nach unten von dem Haltering 20 weggezogen. Der Haltering 20 kann dabei an der Platte 25 angeschraubt vorhanden bleiben. Schließlich wird dann der Stützkorb 32 zusammen mit den beiden Platten 50, 54 zusammen mit der Schraube 60 nach oben aus der Filterpatrone 10 herausgezogen. Der aus Kunststoff bestehende Faltenbalg 12 kann dann zusammen mit den Kunststoffeinfassungen 14, 16 separat von metallischen Teilen der Filterpatrone 10, wie gegebenenfalls dem Stützkorb 32 und beispielsweise auch den Platten 50, 54, entsorgt werden.

Zum Einbau einer neuen Filterpatrone oder einer beispielsweise besonders gereinigten, gewaschenen Filterpatrone, wird dieselbe mit ihrer oberen Kunststoffeinfassung 14 bajonettartig in den Haltering 20 eingeschraubt. Vorher ist der noch vorhandene ehemalige oder gegebenenfalls ein neuer Stützkorb 32 Stützkorb 32 in den Faltenbalg 12 von oben eingeschoben worden. Nachdem die obere Kunststoffeinfassung 14 in dem Haltering 20 befestigt ist, wird durch Verstellen des Schraubenkopfes 64 der Abstand 70 zwischen der oberen Platte 50 und der unteren Platte 54 wieder vergrößert, so daß der Stützkorb 32 fest zwischen der unteren Kunststoffeinfassung 16 und der Schulter 30 des Halteringes 20 (Fig. 2) oder direkt an der Platte 25.1 (Fig. 4) drückend gelagert ist.

## Patentansprüche

1. Filterpatrone (10) zum Einbau in ein Filtergehäuse (25), mit
- einem als Faltenbalg (12) ausgebildeten Filtermedium,
- einer oberen und unteren Kunststoffeinfassung (14, 16), mit der der Faltenbalg (12) jeweils stirnseitig fest verbunden ist, wobei die obere Einfassung an dem Filtergehäuse anhängbar ist,
- einer gasdurchlässigen metallischen Stützvorrichtung (32) im Inneren (42) des Faltenbalges (12), die im eingebauten Zustand der Filterpatrone (10) unter Druckspannung steht und die im nicht eingebauten Zustand der Filterpatrone (10) lose im Inneren (42) des Faltenbalges (12) vorhanden ist,
**dadurch gekennzeichnet**, daß
- eine Spreizvorrichtung (50, 54, 62) an der Stützvorrichtung (32) befestigt ist, mit der die untere Kunststoffeinfassung (16) von der oberen Kunststoffeinfassung (14) wegziehbar und dadurch der Faltenbalg (12) unter Zugspannung bringbar ist,
- die Stützvorrichtung (32) nicht mit der unteren Kunststoffeinfassung (16) verbunden ist.

2. Filterpatrone nach Anspruch 1,
**dadurch gekennzeichnet,** daß
- ein erster plattenartiger Träger (50) am unteren Rand (48) der Stützvorrichtung (32) befestigt ist,
- ein zweiter plattenartiger Träger (54) auf der unteren Kunststoffeinfassung (16), insbesondere gasdicht, auflagert ist,
- beide Träger (50, 54) voneinander wegdrückbar sind.

3. Filterpatrone nach Anspruch 2,
**dadurch gekennzeichnet,** daß
- auf der von dem zweiten Träger (54) weggerichteten Seite (52) des ersten Trägers (50) ein Bauteil (53) mit einem Innengewinde befestigt ist,
- ein Schraubglied (60) quer durch den zweiten Träger (54) und dabei schraubenmäßig auch durch das Bauteil (53) mit dem Innengewinde führbar ist,
- eine Anschlagscheibe (66) auf dem Schraubglied (60) so vorhanden ist, daß es auf der Innenseite des zweiten Trägers (54) anlegbar ist, so daß bei einer Schraubbewegung des Schraubgliedes die beiden Träger relativ zueinander verstellbar sind.

4. Filterpatrone nach Anspruch 3,
**dadurch gekennzeichnet,** daß das Schraubglied (60) ein Linksgewinde besitzt.

5. Filterpatrone nach einem der vorstehenden Ansprüche,
**dadurch gekennzeichnet,** daß die Stützvorrichtung (32) gasdicht anpreßbar an die obere Kunststoffeinfassung (14) ausgebildet ist.

6. Filterpatrone nach einem der vorstehenden Ansprüche,
**dadurch gekennzeichnet,** daß die Stützvorrichtung (32) anpreßbar an das Filtergehäuse (25.1) ausgebildet ist.

7. Filterpatrone nach einem der vorstehenden Ansprüche,
**dadurch gekennzeichnet,** daß
- eine Halteeinrichtung (20) vorhanden ist, an der die obere Kunststoffeinfassung (14) lösbar befestigt ist,
- diese Halteeinrichtung (20) mit dem Filtergehäuse fest verbunden ist.

8. Filterpatrone nach Anspruch 7,
**dadurch gekennzeichnet,** daß die Halteeinrichtung (20) lösbar (26) an dem Filtergehäuse (25) befestigt ist.

9. Filterpatrone nach Anspruch 7,
**dadurch gekennzeichnet,** daß die Stützvorrichtung (32) anpreßbar an der Halteeinrichtung (20, 30) ausgebildet ist.

10. Filterpatrone nach Anspruch 7,
**dadurch gekennzeichnet,** daß
- die Halteeinrichtung als Ringkranz (20), zumindest als abschnittsweise vorhandener Ringkranz, ausgebildet ist,
- am Ringkranz (20) innere Kragbereiche (28, 30) vorhanden sind, gegen die die Stützvorrichtung (32) anpreßbar ist.

11. Filterpatrone nach Anspruch 7,
**dadurch gekennzeichnet,** daß ein gasdichtes Dichtprofil (41) zwischen der Halteeinrichtung (20) und der oberen Kunststoffeinfassung (14) vorhanden ist.

12. Filterpatrone nach einem der vorstehenden Ansprüche,
**dadurch gekennzeichnet,** daß die obere Kunststoffeinfassung (14) einschraubbar, einklemmbar oder einrastbar an der Halteeinrichtung (20) zugfest lösbar befestigt ist.

13. Filterpatrone nach einem der vorstehenden Ansprüche,
**dadurch gekennzeichnet,** daß die Stützvorrichtung in Form eines mit zahlreichen Durchbrüchen versehenen Rohres (32, 46) ausgebildet ist.

## Claims

1. Filter cartridge (10) for installation into a filter housing (25), with
- a filter medium designed as a concertina (12),
- an upper and a lower plastic retainer (14, 16), to which the concertina (12) is fixedly connected in each case on the end face, the upper retainer being attachable to the filter housing,
- a gas-permeable metallic supporting device (32) in the interior (42) of the concertina (12), which supporting device is under compressive stress in the installed state of the filter cartridge (10) and is present loosely in the interior (42) of the concertina (12) in the non-installed state of the filter cartridge (10),
characterized in that
- there is fastened to the supporting device (32) a spreading device (50, 54, 62), by means of which the lower plastic retainer (16) can be pulled away from the upper plastic retainer (14) and the concertina (12) can thereby be brought under tensile stress,
- the supporting device (32) is not connected to the lower plastic retainer (16).

2. Filter cartridge according to Claim 1, characterized in that
- a first plate-like carrier (50) is fastened to the lower edge (48) of the supporting device (32),
- a second plate-like carrier (54) is supported on the lower plastic retainer (16), particularly in a gas-tight manner,
- the two carriers (50, 54) can be pressed away from one another.

3. Filter cartridge according to Claim 2, characterized in that
- a component (53) having an internal thread is fastened to that side (52) of the first carrier (50) directed away from the second carrier (54),
- a screw member (60) can be guided transversely through the second carrier (54) and, at the same time, in a screw-like manner also through the component (53) having the internal thread,
- a stop washer (66) is present on the screw member (60) in such a way that the latter can be laid on the inside of the second carrier (54), so that, during a screwing movement of the screw member, the two carriers are adjustable relative to one another.

4. Filter cartridge according to Claim 3, characterized in that the screw member (60) has a left-hand thread.

5. Filter cartridge according to one of the preceding claims, characterized in that the supporting device (32) is designed so as to be capable of being pressed in a gas-tight manner onto the upper plastic retainer (14).

6. Filter cartridge according to one of the preceding claims, characterized in that the supporting device (32) is designed so as to be capable of being pressed onto the filter housing (25.1).

7. Filter cartridge according to one of the preceding claims, characterized in that
- there is a holding device (20), to which the upper plastic retainer (14) is fastened releasably,
- this holding device (20) is fixedly connected to the filter housing.

8. Filter cartridge according to Claim 7, characterized in that the holding device (20) is fastened releasably (26) to the filter housing (25).

9. Filter cartridge according to Claim 7, characterized in that the supporting device (32) is designed so as to be capable of being pressed on the holding device (20, 30).

10. Filter cartridge according to Claim 7, characterized in that
- the holding device is designed as an annular collar (20), at least as an annular collar present in places,
- inner projecting regions (28, 30), against which the supporting device (32) can be pressed, are present on the annular collar (20).

11. Filter cartridge according to Claim 7, characterized in that a gas-tight sealing profile (41) is present between the holding device (20) and the upper plastic retainer (14).

12. Filter cartridge according to one of the preceding claims, characterized in that the upper plastic retainer (14) is releasably fastened with tension resistance to the holding device (20) in a screwable, clampable or lockable manner.

13. Filter cartridge according to one of the preceding claims, characterized in that the supporting device is designed in the form of a tube (32, 46) provided with numerous perforations.

## Revendications

1. Cartouche filtrante (10) destinée à être montée dans un corps de filtre (25) et comprenant
- un milieu filtrant conformé comme un soufflet (12),
- des bordures supérieure et inférieure en plastique (14, 16) auxquelles le soufflet (12) est relié fermement par ses extrémités, la bordure supérieure pouvant être suspendue au corps de filtre,
- un dispositif métallique de soutien (32) perméable au gaz et placé à l'intérieur (42) du soufflet (12), qui est sous contrainte de compression à l'état monté de la cartouche filtrante (10) et disposé librement à l'intérieur (42) du soufflet (12) à l'état non monté de la cartouche filtrante (10),
caractérisée en ce que
- un dispositif d'écartement (50, 54, 70) est fixé au dispositif de soutien (32) et permet d'écarter la bordure inférieure (16) en plastique par traction de la bordure supérieure (14) en plastique et d'appliquer ainsi une contrainte de traction au soufflet (12), et
- le dispositif de soutien (32) n'est pas relié à la bordure inférieure (16) en plastique.

2. Cartouche filtrante selon la revendication 1, caractérisée en ce que
- un premier support (50) semblable à une plaque est fixé au bord inférieur (48) du dispositif de soutien (32),
- un second support (54) semblable à une plaque est appuyé sur la bordure inférieure (16) en plastique, en particulier de façon étanche au gaz, et
- les deux supports (50, 54) peuvent être repoussés dans le sens de leur éloignement mutuel.

3. Cartouche filtrante selon la revendication 2, caractérisée en ce que
- une pièce (53) présentant un filetage intérieur est fixée sur le côté (52) éloigné du second support (54) du premier support (50),
- un élément vissé (60) peut être engagé transversalement à travers le second support (54) et par suite également à travers la pièce (53) à filetage intérieur, de manière à coopérer avec elle à la façon d'une vis, et
- une rondelle de butée (66) est disposée sur l'élément vissé (60), de manière qu'elle puisse s'appliquer contre le côté intérieur du second support (54), de sorte qu'un mouvement de vissage de l'élément vissé permet de déplacer les deux supports l'un par rapport à l'autre.

4. Cartouche filtrante selon la revendication 3, caractérisée en ce que l'élément vissé (60) possède un filetage avec un pas à gauche.

5. Cartouche filtrante selon une des revendications précédentes, caractérisée en ce que le dispositif de soutien (32) est réalisé pour pouvoir être pressé de façon étanche au gaz contre la bordure supérieure (14).

6. Cartouche filtrante selon une des revendications précédentes, caractérisée en ce que le dispositif de soutien (32) est réalisé pour pouvoir être pressé contre le corps de filtre (25.1).

7. Cartouche filtrante selon une des revendications précédentes, caractérisée en ce que
- un dispositif de support (20) est prévu, auquel la bordure supérieure (14) est fixée de façon détachable et
- ce dispositif de support (20) est relié fixe au corps de filtre.

8. Cartouche filtrante selon la revendication 7, caractérisée en ce que le dispositif de support (20) est fixé de façon détachable (26) au corps de filtre (25).

9. Cartouche filtrante selon la revendication 7, caractérisée en ce que le dispositif de soutien (32) est réalisé pour pouvoir être pressé contre le dispositif de support (20, 30).

10. Cartouche filtrante selon la revendication 7, caractérisée en ce que
- le dispositif de support est réalisé sous la forme d'une couronne annulaire (20) ou tout au moins sous la forme d'une couronne annulaire partielle, et
- des zones (28, 30) faisant saillie vers l'intérieur sont prévues sur la couronne annulaire (20), contre lesquelles peut être pressé le dispositif de soutien (32).

11. Cartouche filtrante selon la revendication 7, caractérisée en ce qu'un élément profilé d'étanchéité (41), qui est étanche au gaz, est prévu entre le dispositif de support (20) et la bordure supérieure (14).

12. Cartouche filtrante selon une des revendications précédentes, caractérisée en ce que la bordure supérieure (14) est fixée de façon détachable au dispositif de support (20), de manière à pouvoir résister à la traction, par vissage, serrage ou encliquetage.

13. Cartouche filtrante selon une des revendications précédentes, caractérisée en ce que le dispositif de soutien est réalisé sous la forme d'un tube (32, 46) pourvu de nombreuses ouvertures.
